# FASCICULE DE BREVET EUROPEEN

(11) **EP 2 737 602 B1**
(45) Date de publication et mention de la délivrance du brevet: **27.04.2016**
(21) Numéro de dépôt: 12743500.6
(22) Date de dépôt: 03.07.2012
(51) Int. Cl.: B60L 11/18, H02J 7/14, H02J 7/00

(54) **SYSTEME DE CONTROLE D'UN REDRESSEUR DE COURANT DESTINE A CHARGER UNE BATTERIE D'UN VEHICULE AUTOMOBILE ELECTRIQUE**
SYSTEM ZUR ÜBERWACHUNG EINES GLEICHRICHTERS ZUM LADEN EINER BATTERIE EINES ELEKTROKRAFTFAHRZEUGS
SYSTEM FOR MONITORING A RECTIFIER FOR CHARGING A BATTERY OF AN ELECTRIC AUTOMOBILE

(30) Priorité: 25.07.2011 FR 1156761
(43) Date de publication de la demande: 04.06.2014
(73) Titulaire: Renault S.A.S., 92100 Boulogne-Billancourt (FR)
(72) Inventeur: LOUDOT, Serge, F-91190 Villiers Le Bacle (FR); GARCIA ESTEBANEZ, Pablo, F-78000 Versailles (FR); OLMI, Florence, F-75016 Paris (FR)
(86) Numéro de dépôt international: PCT/FR2012/051547
(87) Numéro de publication internationale: WO 2013/014351

(56) Documents cités:
- WO-A1-2010/103063
- US-A- 3 581 150
- US-A- 5 384 528

## Description

L'invention concerne le contrôle d'un redresseur de courant utilisé pour charger les batteries alimentant les machines électriques. En particulier, l'invention concerne le contrôle d'un redresseur de courant utilisé pour charger la batterie de traction d'un véhicule automobile électrique.

Pour permettre une recharge de la batterie à partir du réseau triphasé, il est connu d'utiliser un redresseur qui permet de délivrer un courant continu.

Dans l'état de la technique, pour charger des batteries de traction, on utilise en général des redresseurs qui commutent des tensions.

Il est connu de la demande de brevet français N°0951529 un redresseur de courant. Ce redresseur comprend un étage d'entrée redresseur destiné à être raccordé à un réseau d'alimentation et un étage de sortie onduleur destiné à être raccordé à la batterie. Le dispositif comprend en outre des moyens de régulation du courant moyen issu de l'étage d'entrée autour d'une valeur de courant élaborée à partir du courant maximum fourni par le réseau d'alimentation et en fonction d'un coefficient au moins égal à un rapport entre la tension maximale redressée par l'étage d'entrée et la tension de la batterie.

Le contrôle d'un tel redresseur de courant implique d'adapter un circuit de commande d'un commutateur de tension à un commutateur de courant.

Cela étant cette solution n'est pas optimale car les commandes d'un redresseur de tension et d'un redresseur de courant sont très différentes. En effet, la commande d'un redresseur de tension doit permettre d'éviter le court circuit des branches du redresseur. Au contraire, la commande d'un redresseur de courant doit permettre d'éviter une surtension en sortie du redresseur.

Il est également connu de la demande de brevet US5734256 de mesurer une tension en sortie d'un onduleur (VSI, Voltage Source Inverter selon un terme anglo-saxon bien connu de l'homme du métier) pour activer un système d'écrêtage actif à thyristors en cas de détection de surtension.

Il ne s'agit toutefois que d'un simple écrêtage de la tension en cas de surtension. De plus, cet écrêtage n'est pas optimum car il nécessite des composants dissipatifs qui prennent beaucoup de place et assurent un mauvais rendement. Enfin, il ne s'agit pas d'un redresseur de courant utilisant des transistors IGBT mais d'un onduleur comprenant des thyristors.

Le document WO 2010/103063 A1 décrit un système pour charger un batterie dans un véhicule électrique avec réduction de pertes.

Le document US 3 581 150 A décrit un système de protection en cas d'une surtension dans un véhicule.

Le document US 5 384 528 A décrit un système de détection d'un défaut dans un thyristor.

Au vu de ce qui précède, l'invention propose une solution simple pour la commande d'un redresseur de courant, qui permet un bon rendement et qui ne nécessite pas de composants volumineux.

Selon un premier aspect, il est proposé un système de contrôle d'un redresseur destiné à être relié à un réseau électrique monophasé ou polyphasé pour charger une batterie électrique d'un véhicule automobile, ledit redresseur comprenant des moyens de commutation pour redresser le courant du réseau électrique lors de la charge de la batterie et un ensemble de circuits de commande pour contrôler la commutation des moyens de commutation.

Selon une caractéristique générale, ce système comprend un module de mesure pour mesurer la tension en sortie du redresseur lors de la charge de la batterie, des moyens de traitement de ladite tension mesurée pour détecter un défaut des moyens de commutation et des moyens de contrôle capables d'envoyer des ordres de commutation à destination des circuits de commande si au moins un défaut des moyens de commutation est détecté.

Ainsi, le circuit de commande est parfaitement adapté à un redresseur qui commute des courants. Le circuit de commande est également simplifié puisqu'il n'est plus nécessaire de mesurer de mesurer la tension aux bornes de chacun des moyens de commutation.

Selon une caractéristique, les moyens de contrôle comprennent une mémoire pour stocker des ordres de commutation à destination du circuit de commande et sont configurés pour, suite à la détection d'au moins un défaut des moyens de commutation, envoyer des ordres de commutation pour placer les moyens de commutation du redresseur dans leur état précédent l'apparition du défaut des moyens de commutation. La mémorisation des ordres de commutation au moment de la détection d'un défaut permet de réaliser après coup un diagnostic de la panne, en même temps que de placer les moyens de commutation du redresseur dans leur état précédent, état dans lequel le défaut disparaît et permet de passer sans danger à un mode dégradé par exemple.

Ainsi, on peut poursuivre le fonctionnement du redresseur en annulant simplement un ordre de commutation. Par ailleurs, l'annulation d'un ordre de commutation est très rapide et peut être réalisée en un coup d'horloge. Cela permet d'éviter que la surtension en sortie du redresseur n'atteigne un niveau susceptible de détruire les composants du système électrique.

Selon un mode de réalisation, les moyens de traitement comprennent des moyens de détection de dépassements d'au moins un seuil de tension par ladite tension mesurée.

Ainsi, il est possible de détecter de manière très simple un défaut de fonctionnement. La présence de plusieurs seuils permet en outre de juger de la sévérité du défaut de fonctionnement.

Selon une caractéristique, les moyens de traitement comprennent des moyens de détection de la durée de passage d'un seuil de tension à un autre.

Ainsi, il est possible de détecter toute variation rapide, significative d'un risque d'ouverture du courant au neutre de la machine électrique.

Par exemple, les moyens de contrôle sont configurés pour, suite à la détection d'au moins un défaut des moyens de commutation, envoyer des ordres de commutation pour commuter une partie des moyens de commutation du redresseur de manière à ce que le redresseur fonctionne suivant un mode dégradé dans lequel le courant de charge est généré à partir de deux phases ou d'une phase et d'un neutre du réseau électrique.

Ainsi, la disponibilité du véhicule est augmentée puisque la charge est possible même quand une partie des moyens de commutation est défectueuse. La charge est alors plus lente puisque la puissance de charge est moins importante.

Selon une autre caractéristique, la batterie alimente en outre le circuit de commande des moyens de commutation du redresseur, et le système électrique comprend des moyens d'isolation entre la batterie et le circuit de commande.

Ainsi, le circuit de commande est simplifié et il n'est plus nécessaire qu'il dispose d'une isolation galvanique.

Selon encore une autre caractéristique, les moyens de contrôle sont configurés pour, suite à la détection d'au moins un défaut des moyens de commutation, envoyer des ordres de commutation pour commuter une partie des moyens de commutation du redresseur de manière à ce que la charge soit interrompue.

Ainsi, en arrêtant la charge on évite tout risque de destruction des composants.

Selon un autre aspect, il est proposé un procédé de contrôle du fonctionnement d'un redresseur destiné à être relié à un réseau électrique monophasé ou polyphasé pour charger une batterie électrique d'un véhicule automobile, ledit redresseur comprenant des moyens de commutation pour redresser le courant du réseau électrique lors de la charge de la batterie et un ensemble de circuits de commande pour contrôler la commutation des moyens de commutation, comprenant:
- une mesure de la tension en sortie du redresseur lors de la charge de la batterie ;
- un traitement de ladite tension mesurée pour détecter un défaut des moyens de commutation; et
- un envoi d'ordres de commutation à destination des circuits de commande si au moins un défaut des moyens de commutation est détecté.

Selon une caractéristique, le procédé comprend un stockage des ordres de commutation à destination du circuit de commande et, dans le cas de la détection d'au moins un défaut des moyens de commutations, un envoi d'ordres de commutation pour placer les moyens de commutation du redresseur dans leur état précédent l'apparition du défaut des moyens de commutation.

Selon un mode de réalisation, le procédé comprend une étape de détection de dépassements d'au moins un seuil de tension par ladite tension mesurée.

Par exemple, le procédé comprend une étape de détection de la durée de passage d'un seuil de tension à un autre.

Selon une autre caractéristique, le procédé comprend, dans le cas de la détection d'au moins un défaut des moyens de commutation, un envoi d'ordres de commutation pour commuter une partie des moyens de commutation du redresseur de manière à ce que le redresseur fonctionne suivant un mode dégradé dans lequel un courant de charge est généré à partir de deux phases ou d'une phase et d'un neutre du réseau électrique.

Selon encore une autre caractéristique, le procédé comprend, dans le cas de la détection d'au moins un défaut des moyens de commutation, un envoi d'ordres de commutation pour commuter une partie des moyens de commutation du redresseur de manière à ce que la charge soit interrompue.

D'autres avantages et caractéristiques de l'invention apparaîtront à l'examen de la description suivante, nullement limitative, et des dessins annexés, sur lesquels :
- la figure 1 illustre de manière schématique un système électrique comprenant un redresseur selon l'état de la technique ;
- la figure 2 illustre de manière schématique la commande des moyens de commutation du redresseur selon l'état de la technique ;
- la figure 3 illustre de manière schématique un système électrique comprenant une machine électrique et un redresseur selon l'invention ;
- la figure 4 illustre de manière schématique la commande des moyens de commutation du redresseur selon l'invention ;
- la figure 5 illustre la tension en sortie du redresseur et sa comparaison à plusieurs seuils.

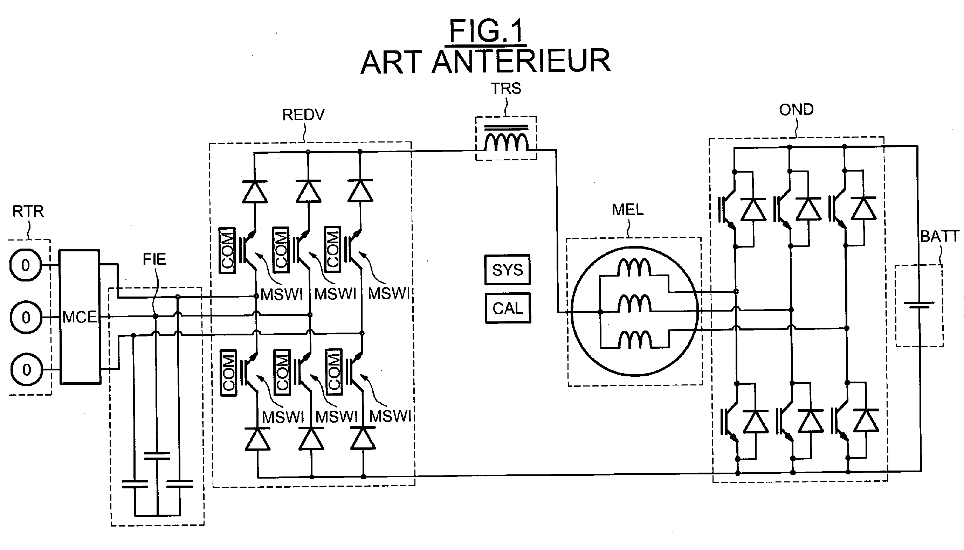

La figure 1 représente un système électrique comprenant un redresseur selon l'état de la technique. Ce système est par exemple destiné à être utilisé au sein d'un véhicule automobile électrique pour assurer la charge de la batterie de traction dudit véhicule.

Ce système comprend successivement une batterie de traction BAT, un onduleur OND, un moteur électrique MEL, un redresseur REDV comprenant des moyens de commutation MSWI contrôlés par des circuits de commande, un filtre d'entrée FIE, une bobine TRS et un module de compatibilité électromagnétique MCE qui comprend également des éléments de filtrage. Ce système est destiné à être branché via le module de compatibilité électromagnétique MCE à un réseau triphasé RTR.

L'onduleur comprend à titre d'exemple de réalisation des transistors IGBT (Insulated Gate Bipolar Transistor) selon un terme anglo-saxon bien connu de l'homme du métier. Le filtre d'entrée FIE peut comprendre des capacités.

Le système électrique comprend en outre un calculateur de supervision CAL et des moyens de contrôle SYS. Les moyens de contrôle SYS gèrent la chronologie des ordres de commutation à destination des moyens de commutation MSWI. Les ordres de commutation sont envoyés à des circuits de commande COM qui contrôlent alors la commutation des moyens de commutation MSWI. Les moyens de contrôle SYS sont à titre d'exemple de réalisation un système logique.

La commande des moyens de commutation MSWI permet la commutation d'une tension au sein du redresseur REDV. Le redresseur REDV comprend trois branches, chacune correspondant à une des trois phases du courant triphasé du réseau RTR. Chacune des branches comprend deux moyens de commutation MSWI. Ainsi le redresseur REDV comprend six moyens de commutation MSWI, chacun étant contrôlé par un circuit de commande COM.

Les moyens de commutation MSWI du redresseur REDV sont à titre d'exemple de réalisation des transistors IGBT (Insulated Gate Bipolar Transistor).

En mode de charge, le réseau triphasé RTR fournit une tension de charge triphasée. Cette tension est filtrée par le filtre d'entrée FIE, le filtre d'entrée étant séparé du réseau triphasé par le module MCE. Le redresseur REDV distribue suivant une stratégie de modulation donnée le courant de l'inductance TRS sur les phases de façon à absorber sur le réseau des courants pilotés (typiquement sinusoïdaux et en phase avec la tension). L'onduleur OND distribue à la batterie BATT une fraction du courant de l'inductance TRS. Une loi de régulation du courant de l'inductance TRS permet d'assurer l'équilibre entre la puissance absorbée au réseau et la puissance fournie à la batterie de traction BAT.

En mode de roulage, la machine électrique MEL est alimentée par la batterie de traction BAT via l'onduleur OND qui permet de délivrer à la machine électrique un courant alternatif triphasé ayant une amplitude et/ou une fréquence variables.

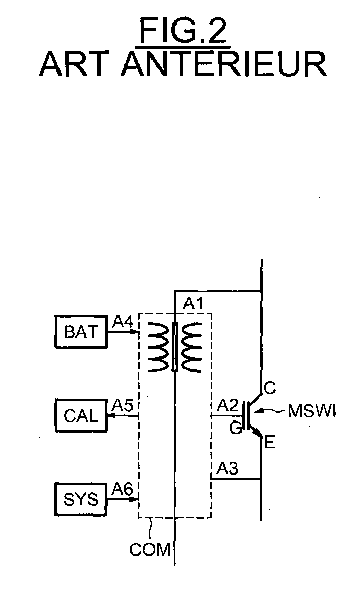

La figure 2 représente plus en détail le circuit de commande COM et le moyens de commutation MSWI de la figure 1. Le circuit de commande COM est relié au moyen de commutation MSWI qui est pour cet exemple de réalisation un transistor de type IGBT.

Le transistor MSWI comprend trois bornes, une grille G, un collecteur C, et un émetteur E.

Le circuit de commande COM est relié par une borne A2 à la grille G du transistor pour contrôler sa commutation. Le circuit de commande COM est également relié par une borne A1 au collecteur C et par une borne A3 à l'émetteur E. Il peut ainsi mesurer la tension VCE entre le collecteur C et l'émetteur E de manière à contrôler la bonne fermeture/ouverture du transistor MSWI. De plus, si le transistor MSWI se ferme correctement mais sur un court circuit, cela va provoquer un phénomène de désaturation sur la tension VCE. Le circuit COM est donc également capable de détecter la fermeture sur un court circuit.

Le circuit de commande COM comprend en outre une borne A4 par laquelle il est relié à la batterie BAT qui lui fournit une tension d'alimentation. Il comprend une borne A5 par laquelle il avertit le calculateur de supervision CAL d'un défaut de court circuit par exemple. Il comprend enfin une borne A6 par laquelle il reçoit un ordre de commutation de la part du système logique SYS.

Le circuit de commande COM comprend en outre un isolement galvanique de manière à isoler l'étage de commande et le transistor de la tension de la batterie.

Le système électrique des figures 1 et 2 selon l'état de la technique présente des inconvénients. D'une part, la détection de désaturation d'un IGBT en court-circuit ne s'applique pas dans le cas d'un commutateur de courant. D'autre part, chaque connexion entre les circuits de commande COM et les moyens de commutation MSWI nécessite un isolement galvanique.

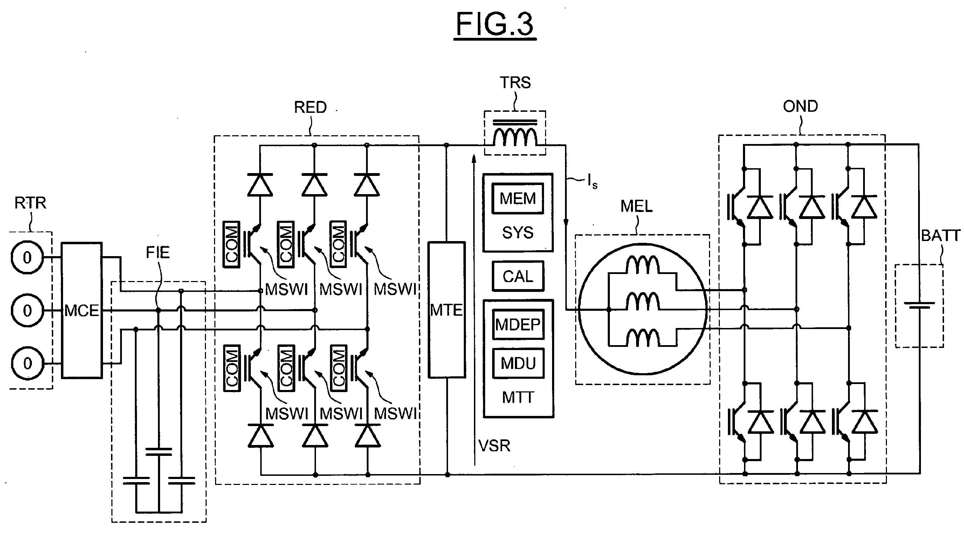

La figure 3 représente le système électrique comprenant un redresseur RED et sa commande selon l'invention.

On retrouve, dans le système électrique de la figure 3, la batterie de traction BAT, l'onduleur OND, le moteur électrique MEL, la bobine TRS, le module de compatibilité électromagnétique et filtrage MCE, le calculateur de supervision CAL et les moyens de contrôle SYS.

Le redresseur RED redresse les courants du réseau monophasé ou polyphasé (par exemple triphasé) RTR à partir desquels il génère un courant de charge Is qui va charger la batterie BAT.

En outre, les connexions entre les circuits de commande COM et les moyens de commutation MSWI sont simplifiées.

Enfin, le système électrique de la figure 3 comprend des moyens de traitement MTT et un module de mesure MTE.

Le module de mesure MTE est branché en parallèle à la sortie du redresseur RED. Le module MTE mesure la tension VSR en sortie du redresseur RED.

Les moyens de traitement MTT comparent la tension VSR avec des seuils de tension. Les moyens de traitement MTT comprennent des moyens de détection de la durée MDU de passage d'un seuil de tension à un autre et des moyens de détection de dépassements MDEP d'au moins un seuil de tension.

Le module MTE coopère avec les moyens de traitement MTT pour assurer notamment lors de la charge de la batterie BAT une commande performante des moyens de commutation MSWI du redresseur RED. Cette commande est réalisée par l'envoi d'ordres de commutation aux circuits de commande COM qui vont commuter en fonction les moyens de commutation MSWI.

Par ailleurs, les moyens de contrôle SYS comprennent une mémoire MEM. Grâce à cette mémoire, dans le cas de la détection d'un défaut de fonctionnement par les moyens MTT, il est possible en analysant les ordres de commutation mémorisés dans la mémoire MEM de déterminer le moyen de commutation MSWI à l'origine du défaut.

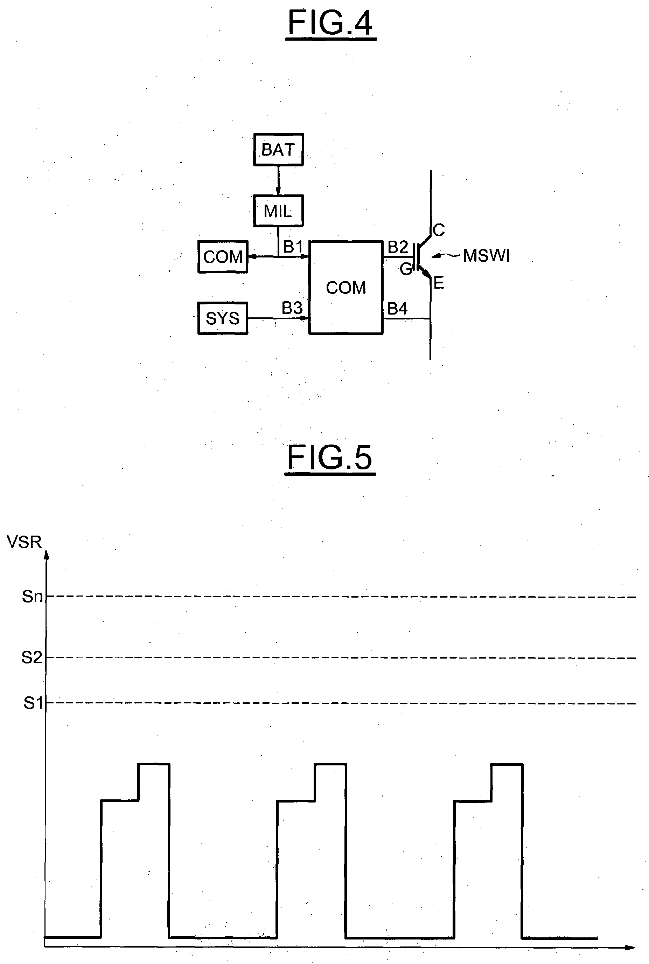

La figure 4 représente plus en détail la connexion d'un circuit de commande COM et du moyen de commutation MSWI selon l'invention. Le moyen de commutation MSWI est par exemple un transistor de type IGBT.

Le circuit de commande COM est relié par une borne B2 à la grille G du transistor MSWI pour contrôler sa commutation. Le circuit COM est également relié par une borne B4 à l'émetteur E.

Le circuit de commande COM comprend en outre une borne B1 par laquelle il est relié à la batterie BAT qui lui fournit une tension d'alimentation. Cette tension d'alimentation est préalablement isolée de la batterie grâce à des moyens d'isolement MIL. D'autre part cette alimentation isolée est distribuée vers les circuits de commande des autres moyens de commutations du redresseur RED.

Le circuit de commande comprend enfin une borne B3 par laquelle il reçoit un ordre de commutation de la part du système logique SYS.

Ainsi, il n'est plus nécessaire d'utiliser une isolation galvanique du circuit de commande COM. L'alimentation de la batterie est isolée une seule fois pour tous les moyens de commutation MSWI par les moyens MIL. De plus, le circuit de commande COM est simplifié puisqu'il ne nécessite plus la mesure de la tension VCE. Egalement, il est possible de commander de manière performante un redresseur qui commute une intensité.

La figure 5 représente le graphique de la variation en fonction du temps de la tension mesurée VSR. Le graphique comprend en ordonnée plusieurs seuils : S1, S2, ... Sn. Ces seuils ont une valeur en volts qui est incrémentée d'un seuil à son suivant.

Ils sont utilisés par les moyens de traitement MTT pour détecter la présence d'un défaut de fonctionnement. Les moyens de traitement sont configurés pour comparer de manière continue la tension mesurée VSR avec les seuils S1, S2, ... Sn de manière à détecter la présence d'un défaut de fonctionnement. Un défaut étant typiquement une commande ou tout autre défaut amenant REDV à tenter d'interrompre le courant de la bobine TRS générant ainsi une surtension détectable par le dépassement d'un des seuils.

Plus précisément, les informations suivantes sont déterminées par les moyens MDU et MDEP des moyens de traitement MTT :
- le nombre de seuils de tension franchis. Par exemple, seul le premier seuil de tension S1 peut être franchi par la tension VSR ou selon un autre exemple seuls les seuils S1 et S2 peuvent être franchis par la tension VSR ;
- l'instant auquel le franchissement par la tension VSR de chacun des seuils intervient ;
- la durée de passage d'un seuil de tension à un autre. Cette information permet de déterminer la pente du front en sortie du redresseur ; et
- la répétition du franchissement d'un ou plusieurs seuils.

En fonction de ces informations de franchissement des seuils, différentes actions sont alors possibles de la part du système logique SYS :
- le système logique peut envoyer un ordre de commutation au circuit de commande COM pour que le moyen de commutation à l'origine du défaut soit remis dans son état préalable. Ainsi l'annulation de l'ordre peut être réalisée en un coup d'horloge seulement,
- le système logique peut envoyer un ordre de commutation à plusieurs circuits de commande COM des moyens de commutation MSWI d'au moins une branche de manière à poursuivre la charge de la batterie dans un mode dégradé en monophasé, c'est-à-dire en utilisant seulement une phase au lieu de trois,
- le système logique peut envoyer un ordre de commutation à plusieurs circuits de commande COM des moyens de commutation MSWI d'au moins une branche de manière à interrompre la charge.

Ainsi, on peut obtenir des informations qui permettent de juger de la sévérité du défaut de fonctionnement. Par exemple, en fonction du nombre de seuils de tension franchis ou de la fréquence de répétition de franchissement des seuils de tension. Une réponse graduée est alors possible.

Par exemple, dans le cas où un seul franchissement du seuil de tension S1 est détecté alors l'action prise par le système SYS sera l'annulation du dernier ordre de commutation. Par contre, dans le cas de plusieurs franchissement du seuil de tension S3 avec un temps de passage de S2 à S3 faible l'action prise par le système SYS sera le passage dans le mode dégradé selon lequel le courant de charge Is est généré à partir de deux phases ou d'une phase et d'un neutre du réseau électrique RTR. Il peut même être envisagé l'arrêt de la charge en fonction de la sévérité du défaut de fonctionnement.

Ces mesures permettent de protéger les composants électroniques d'une surtension. La disponibilité du véhicule est améliorée puisque d'une part il est possible de poursuivre la charge même en cas de défaillance de plusieurs moyens de commutation dans un mode dégradé et puisque d'autre part on peut détecter un défaut de fonctionnement peu sévère pour lequel la réparation est rapide avant l'arrivée d'un défaut de fonctionnement plus sévère nécessitant une immobilisation du véhicule.

## Revendications

1. Système de contrôle d'un redresseur (RED) destiné à être relié à un réseau électrique monophasé ou polyphasé (RTR) pour charger une batterie électrique (BAT) d'un véhicule automobile, ledit redresseur (RED) comprenant des moyens de commutation (MSWI) pour redresser le courant du réseau électrique (RTR) lors de la charge de la batterie et un ensemble de circuits de commande (COM) pour contrôler la commutation des moyens de commutation (MSWI),
**caractérisé en ce qu'**il comprend un module de mesure (MTE) pour mesurer la tension en sortie du redresseur (VSR) lors de la charge de la batterie, des moyens de traitement (MTT) de ladite tension mesurée (VSR) pour détecter un défaut des moyens de commutation (MSWI) et des moyens de contrôle (SYS) capables d'envoyer des ordres de commutation à destination des circuits de commande (COM) si au moins un défaut des moyens de commutation (MSWI) est détecté, et **en ce que** lesdits moyens de contrôle (SYS) comprennent une mémoire (MEM) pour stocker des ordres de commutation à destination du circuit de commande (COM) et sont configurés pour, suite à la détection d'au moins un défaut des moyens de commutation (MSWI), envoyer des ordres de commutation pour placer les moyens de commutation (MSWI) du redresseur (RED) dans leur état précédent l'apparition du défaut des moyens de commutations (MSWI).

2. Système électrique selon la revendication 1, dans lequel les moyens de traitement (MTT) comprennent des moyens de détection de dépassements (MDEP) d'au moins un seuil de tension par ladite tension mesurée (VSR).

3. Système électrique selon la revendication 1 ou 2, dans lequel les moyens de traitement (MTT) comprennent des moyens de détection de la durée (MDU) de passage d'un seuil de tension à un autre.

4. Système électrique selon l'une quelconque des revendications 1 à 3, dans lequel les moyens de contrôle (SYS) sont configurés pour, suite à la détection d'au moins un défaut des moyens de commutation (MSWI), envoyer des ordres de commutation pour commuter une partie des moyens de commutation (MSWI) du redresseur (RED) de manière à ce que le redresseur fonctionne suivant un mode dégradé dans lequel un courant de charge (Is) est généré à partir de deux phases ou d'une phase et d'un neutre du réseau électrique (RTR).

5. Système électrique selon l'une quelconque des revendications 1 à 4, dans lequel la batterie (BAT) alimente en outre le circuit de commande des moyens de commutation du redresseur, comprenant des moyens d'isolation entre la batterie (BAT) et le circuit de commande (COM).

6. Système électrique selon l'une quelconque des revendications 1 à 5, dans lequel les moyens de contrôle (SYS) sont configurés pour, suite à la détection d'au moins un défaut des moyens de commutation (MSWI), envoyer des ordres de commutation pour commuter une partie des moyens de commutation (MSWI) du redresseur (RED) de manière à ce que la charge soit interrompue.

7. Procédé de contrôle du fonctionnement d'un redresseur (RED) destiné à être relié à un réseau électrique monophasé ou polyphasé (RTR) pour charger une batterie électrique (BAT) d'un véhicule automobile, ledit redresseur (RED) comprenant des moyens de commutation (MSWI) pour redresser le courant du réseau électrique (RTR) lors de la charge de la batterie et un ensemble de circuits de commande (COM) pour contrôler la commutation des moyens de commutation (MSWI), ledit procédé étant **caractérisé en ce qu'**il comprend :
- une mesure de la tension en sortie du redresseur (VSR) lors de la charge de la batterie (BAT);
- un traitement de ladite tension mesurée (VSR) pour détecter un défaut des moyens de commutation (MSWI);
- un envoi d'ordres de commutation à destination des circuits de commande (COM) si au moins un défaut des moyens de commutation (MSWI) est détecté,
- un stockage des ordres de commutation à destination du circuit de commande (COM);
- et dans le cas de la détection d'au moins un défaut des moyens de commutation, un envoi d'ordres de commutation pour placer les moyens de commutation (MSWI) du redresseur (RED) dans leur état précédent l'apparition du défaut des moyens de commutations (MSWI).

8. Procédé selon la revendication 7, comprenant en outre une étape de détection de dépassements d'au moins un seuil de tension par ladite tension mesurée (VSR).

9. Procédé selon la revendications 7 ou 8, comprenant une étape de détection de la durée de passage d'un seuil de tension à un autre.

10. Procédé selon l'une quelconque des revendications 7 à 9, comprenant dans le cas de la détection d'au moins un défaut des moyens de commutations, un envoi d'ordres de commutation pour commuter une partie des moyens de commutation (MSWI) du redresseur (RED) de manière à ce que le redresseur (RED) fonctionne suivant un mode dégradé dans lequel un courant de charge (Is) est généré à partir de deux phases ou d'une phase et d'un neutre du réseau électrique (RTR).

11. Procédé selon l'une quelconque des revendications 7 à 10, comprenant dans le cas de la détection d'au moins un défaut des moyens de commutations, un envoi d'ordres de commutation pour commuter une partie des moyens de commutation (MSWI) du redresseur (RED) de manière à ce que la charge soit interrompue.

## Patentansprüche

1. System zur Überwachung eines Gleichrichters (RED), der dazu bestimmt ist, mit einem einphasigen oder mehrphasigen Stromnetz (RTR) verbunden zu werden, um eine elektrische Batterie (BAT) eines Kraftfahrzeugs zu laden, wobei der Gleichrichter (RED) Umschaltmittel (MSWI), um den Strom des Stromnetzes (RTR) beim Laden der Batterie gleichzurichten, und eine Anordnung von Steuerschaltungen (COM) zum Überwachen der Umschaltung der Umschaltmittel (MSWI) aufweist,
**dadurch gekennzeichnet, dass** es ein Messmodul (MTE) zum Messen der Spannung am Ausgang des Gleichrichters (VSR) während des Ladens der Batterie, Mittel zur Verarbeitung (MTT) der gemessenen Spannung (VSR), um einen Fehler der Umschaltmittel (MSWI) zu erkennen, und Überwachungsmittel (SYS), die in der Lage sind, Umschaltbefehle an die Steuerschaltungen (COM) zu senden, falls wenigstens ein Fehler der Umschaltmittel (MSWI) erkannt wird, aufweist, und dadurch, dass die Überwachungsmittel (SYS) einen Speicher (MEM) zum Speichern der an die Steuerschaltung (COM) gesendeten Umschaltbefehle aufweisen und dafür ausgelegt sind, nach der Erkennung wenigstens eines Fehlers der Umschaltmittel (MSWI) Umschaltbefehle zu senden, um die Umschaltmittel (MSWI) des Gleichrichters (RED) in ihren dem Auftreten des Fehlers der Umschaltmittel (MSWI) vorausgehenden Zustand zu versetzen.

2. Elektrisches System nach Anspruch 1, wobei die Verarbeitungsmittel (MTT) Mittel zur Erkennung von Überschreitungen (MDEP) wenigstens eines Spannungsschwellenwertes durch die gemessene Spannung (VSR) aufweisen.

3. Elektrisches System nach Anspruch 1 oder 2, wobei die Verarbeitungsmittel (MTT) Mittel zur Erkennung der Dauer (MDU) des Durchgangs von einem Spannungsschwellenwert zu einem anderen aufweisen.

4. Elektrisches System nach einem der Ansprüche 1 bis 3, wobei die Überwachungsmittel (SYS) dafür ausgelegt sind, nach der Erkennung wenigstens eines Fehlers der Umschaltmittel (MSWI) Umschaltbefehle zu senden, um einen Teil der Umschaltmittel (MSWI) des Gleichrichters (RED) umzuschalten, derart, dass der Gleichrichter in einem eingeschränkten Modus arbeitet, in welchem ein Ladestrom (Is) aus zwei Phasen oder aus einer Phase und einem Nullpunkt des Stromnetzes (RTR) erzeugt wird.

5. Elektrisches System nach einem der Ansprüche 1 bis 4, wobei die Batterie (BAT) außerdem die Steuerschaltung der Umschaltmittel des Gleichrichters speist, welches Mittel zur Trennung zwischen der Batterie (BAT) und der Steuerschaltung (COM) aufweist.

6. Elektrisches System nach einem der Ansprüche 1 bis 5, wobei die Überwachungsmittel (SYS) dafür ausgelegt sind, nach der Erkennung wenigstens eines Fehlers der Umschaltmittel (MSWI) Umschaltbefehle zu senden, um einen Teil der Umschaltmittel (MSWI) des Gleichrichters (RED) umzuschalten, derart, dass der Ladevorgang unterbrochen wird.

7. Verfahren zur Überwachung des Betriebs eines Gleichrichters (RED), der dazu bestimmt ist, mit einem einphasigen oder mehrphasigen Stromnetz (RTR) verbunden zu werden, um eine elektrische Batterie (BAT) eines Kraftfahrzeugs zu laden, wobei der Gleichrichter (RED) Umschaltmittel (MSWI), um den Strom des Stromnetzes (RTR) beim Laden der Batterie gleichzurichten, und eine Anordnung von Steuerschaltungen (COM) zum Überwachen der Umschaltung der Umschaltmittel (MSWI) aufweist, wobei das Verfahren **dadurch gekennzeichnet ist, dass** es aufweist:
- eine Messung der Spannung am Ausgang des Gleichrichters (VSR) während des Ladens der Batterie (BAT);
- eine Verarbeitung der gemessenen Spannung (VSR), um einen Fehler der Umschaltmittel (MSWI) zu erkennen;
- ein Senden von Umschaltbefehlen an die Steuerschaltungen (COM), falls wenigstens ein Fehler der Umschaltmittel (MSWI) erkannt wird;
- eine Speicherung der an die Steuerschaltung (COM) gesendeten Umschaltbefehle;
- und im Falle der Erkennung wenigstens eines Fehlers der Umschaltmittel, ein Senden von Umschaltbefehlen, um die Umschaltmittel (MSWI) des Gleichrichters (RED) in ihren dem Auftreten des Fehlers der Umschaltmittel (MSWI) vorausgehenden Zustand zu versetzen.

8. Verfahren nach Anspruch 7, welches außerdem einen Schritt der Erkennung von Überschreitungen wenigstens eines Spannungsschwellenwertes durch die gemessene Spannung (VSR) aufweist.

9. Verfahren nach Anspruch 7 oder 8, welches einen Schritt der Erkennung der Dauer des Durchgangs von einem Spannungsschwellenwert zu einem anderen aufweist.

10. Verfahren nach einem der Ansprüche 7 bis 9, welches im Falle der Erkennung wenigstens eines Fehlers der Umschaltmittel ein Senden von Umschaltbefehlen aufweist, um einen Teil der Umschaltmittel (MSWI) des Gleichrichters (RED) umzuschalten, derart, dass der Gleichrichter (RED) in einem eingeschränkten Modus arbeitet, in welchem ein Ladestrom (Is) aus zwei Phasen oder aus einer Phase und einem Nullpunkt des Stromnetzes (RTR) erzeugt wird.

11. Verfahren nach einem der Ansprüche 7 bis 10, welches im Falle der Erkennung wenigstens eines Fehlers der Umschaltmittel ein Senden von Umschaltbefehlen aufweist, um einen Teil der Umschaltmittel (MSWI) des Gleichrichters (RED) umzuschalten, derart, dass der Ladevorgang unterbrochen wird.

## Claims

1. System for monitoring a rectifier (RED) intended to be linked to a single-phase or polyphase electrical network (RTR) for charging an electric battery (BAT) of an automotive vehicle, said rectifier (RED) comprising switching means (MSWI) for rectifying the current of the electrical network (RTR) during the charging of the battery and a set of control circuits (COM) for controlling the switching of the switching means (MSWI),
**characterized in that** it comprises a measuring module (MTE) for measuring the voltage at the output of the rectifier (VSR) during the charging of the battery, means for processing (MTT) said measured voltage (VSR) in order to detect a fault in the switching means (MSWI) and monitoring means (SYS) capable of sending switching commands to the control circuits (COM) if at least one fault in the switching means (MSWI) is detected, and **in that** said monitoring means (SYS) comprise a memory (MEM) for storing switching commands intended for the control circuit (COM) and are configured for sending, subsequent to the detection of at least one fault in the switching means (MSWI), switching commands in order to reset the switching means (MSWI) of the rectifier (RED) to their state prior to the occurrence of the fault in the switching means (MSWI).

2. Electrical system according to Claim 1, in which the processing means (MTT) comprise means for detecting overshoots (MDEP) of at least one voltage threshold by said measured voltage (VSR).

3. Electrical system according to Claim 1 or 2, in which the processing means (MTT) comprise means for detecting the duration (MDU) of crossing from one voltage threshold to another.

4. Electrical system according to any one of Claims 1 to 3, in which the monitoring means (SYS) are configured for sending, subsequent to the detection of at least one fault in the switching means (MSWI), switching commands in order to switch a portion of the switching means (MSWI) of the rectifier (RED) in such a way that the rectifier operates in a downgraded mode in which a charging current (Is) is generated from two phases or from one phase and a neutral of the electrical network (RTR).

5. Electrical system according to any one of Claims 1 to 4, in which the battery (BAT) additionally supplies the control circuit of the switching means of the rectifier, comprising insulation means between the battery (BAT) and the control circuit (COM).

6. Electrical system according to any one of Claims 1 to 5, in which the monitoring means (SYS) are configured for sending, subsequent to the detection of at least one fault in the switching means (MSWI), switching commands in order to switch a portion of the switching means (MSWI) of the rectifier (RED) in such a way that the charging is interrupted.

7. Method for monitoring the operation of a rectifier (RED) intended to be linked to a single-phase or polyphase electrical network (RTR) for charging an electric battery (BAT) of an automotive vehicle, said rectifier (RED) comprising switching means (MSWI) for rectifying the current of the electrical network (RTR) during the charging of the battery and a set of control circuits (COM) for controlling the switching of the switching means (MSWI), said method being **characterized in that** it comprises:
- measuring the voltage at the output of the rectifier (VSR) during the charging of the battery;
- processing said measured voltage (VSR) in order to detect a fault in the switching means (MSWI);
- sending switching commands to the control circuits (COM) if at least one fault in the switching means (MSWI) is detected;
- storing the switching commands intended for the control circuit (COM);
- and in the event of the detection of at least one fault in the switching means, sending switching commands in order to reset the switching means (MSWI) of the rectifier (RED) to their state prior to the occurrence of the fault in the switching means (MSWI).

8. Method according to Claim 7, additionally comprising a step of detecting overshoots of at least one voltage threshold by said measured voltage (VSR).

9. Method according to Claim 7 or 8, comprising a step of detecting the duration of crossing from one voltage threshold to another.

10. Method according to any one of Claims 7 to 9, comprising, in the event of the detection of at least one fault in the switching means, the sending of switching commands in order to switch a portion of the switching means (MSWI) of the rectifier (RED) in such a way that the rectifier (RED) operates in a downgraded mode in which a charging current (Is) is generated from two phases or from one phase and a neutral of the electrical network (RTR).

11. Method according to any one of Claims 7 to 10, comprising, in the event of the detection of at least one fault in the switching means, the sending of switching commands in order to switch a portion of the switching means (MSWI) of the rectifier (RED) in such a way that the charging is interrupted.
